# DEMANDE DE BREVET EUROPEEN

(11) **EP 2 471 676 A1**
(43) Date de publication de la demande: **04.07.2012**
(21) Numéro de dépôt: 11192690.3
(22) Date de dépôt: 08.12.2011
(51) Int. Cl.: B60J 1/20

(54) **Dispositif d'occultation pour véhicule automobile, et véhicule correspondant**

(30) Priorité: 30.12.2010 FR 1061369
(71) Demandeur: Advanced Comfort Systems France SAS - ACS France, 79302 Bressuire Cedex (FR)
(72) Inventeur: Jincheleau, Michel, 79320 MONCOUTANT (FR)
(74) Mandataire: Bioret, Ludovic

(57) **Abrégé**

L'invention concerne un dispositif d'occultation d'une baie d'une portière d'un véhicule automobile, comprenant un boîtier dans lequel est logé un support d'enroulement auquel est solidarisée une toile d'occultation mobile entre une position repliée, dans laquelle elle est au moins en partie enroulée sur ledit support d'enroulement, et au moins une position déployée,

Selon l'invention, ledit boîtier est réalisé en polymère thermoplastique expansé.

## Description

### 1. Domaine de l'invention

Le domaine de l'invention est celui des stores d'occultation pour portière de véhicule.

Plus précisément, l'invention concerne les stores rétractables à enrouleur, que l'utilisateur peut déployer, par exemple pour se protéger du soleil.

### 2. Art antérieur

Classiquement, les portières de véhicule présentent un panneau de porte, sur lequel est montée une vitre, par exemple fixe ou coulissante. Le panneau de porte comprend généralement une partie tôlée, sur sa face extérieure, correspondant à la carrosserie du véhicule, et une garniture de porte sur sa face intérieure (appelée également par la suite, par simplification, panneau intérieur).

On notera ici que le terme portière englobe les deux ou quatre portières d'un véhicule, mais que l'invention peut également être généralisée, par extension, à des parties de carrosserie fixes portant une vitre (cas des vitres arrière d'un véhicule à deux portes ou d'un véhicule utilitaire, ou de la vitre arrière d'un véhicule) et à d'autres parties mobiles, telles que les hayons ou les toits ouvrants. On utilise par la suite le terme portière pour des raisons de simplicité, mais il est clair que l'invention s'applique à tout type d'ouverture ménagée dans un véhicule.

On équipe depuis longtemps les véhicules automobiles de stores à enrouleur, pour permettre l'occultation de la vitre (baie) de telles portières, afin de protéger en cas de besoin les occupants du véhicule de la chaleur ou de la lumière.

Ces stores à enrouleur comprennent généralement une toile d'occultation, montée sur un tube enrouleur (ou tube d'enroulement), la toile d'occultation étant mobile entre une position repliée et une position déployée.

L'ensemble des éléments composant le store est généralement monté dans un boîtier, ou un élément de support, lui-même solidarisé à la structure du véhicule. Il peut, par exemple, être fixé sur la partie supérieure du panneau intérieur (c'est-à-dire sur le caisson) de la portière ou à l'intérieur de la portière, sous le panneau intérieur (c'est-à-dire à l'intérieur du caisson).

Selon une technique connue, les boîtiers et les tubes enrouleurs de tels stores sont moulés par injection de matière plastique ou composite, par exemple en matière ABS PC (correspondant à un alliage d'acrylonitrile butadiène styrène et de polycarbonate), ou dans un matériau métallique rigide, tel qu'un alliage d'aluminium.

La mise en oeuvre de ces matériaux ne donne pas entièrement satisfaction, notamment du fait qu'ils sont difficilement recyclables, alors que la tendance actuelle dans l'automobile est de trier les pièces et les matières composant le véhicule qui soient aisément recyclables en vue de leur recyclage vers l'aciérie, la fonderie, l'affinerie et la plasturgie.

En outre, la performance phonique de ces matériaux n'est pas optimale.

Ainsi, des boîtiers et des tubes fabriqués dans ces matériaux ont tendance à propager les bruits générés dans l'habitacle du véhicule lorsque celui-ci se déplace, plutôt que de les atténuer. Par ailleurs, ils peuvent être à l'origine de bruits parasites audibles qui peuvent également donner une impression d'un store de qualité moindre, ce qui n'est pas acceptable.

Enfin, le poids des boîtiers et tubes fabriqués à partir de ces matériaux est relativement élevé et leur fabrication nécessite un outillage complexe et coûteux.

### 3. Objectifs de l'invention

L'invention a notamment pour objectif de pallier au moins certains de ces inconvénients de l'art antérieur.

Plus précisément, l'invention a pour objectif de proposer, dans au moins un mode de réalisation, un dispositif d'occultation, mettant en oeuvre une toile mobile entre une position déployée et une position repliée, dont les performances phoniques et le poids sont optimisés.

Un autre objectif de l'invention, dans au moins un mode de réalisation, est de proposer un dispositif d'occultation qui soit facile à fabriquer et peu coûteux.

Encore un objectif de l'invention est, dans au moins un mode de réalisation, de proposer un dispositif d'occultation qui soit aisément recyclable.

L'invention a également pour objectif de l'invention, dans au moins un mode de réalisation, de mettre en oeuvre un dispositif d'occultation qui soit simple à assembler et à installer et dont la maintenance et notamment le remplacement soient faciles.

### 4. Résumé de l'invention

Ces objectifs, ainsi que d'autres qui apparaîtront par la suite, sont atteints grâce à l'invention qui a pour objet un dispositif d'occultation d'une baie d'une portière d'un véhicule automobile, comprenant un boîtier dans lequel est logé un support d'enroulement auquel est solidarisée une toile d'occultation mobile entre une position repliée, dans laquelle elle est au moins en partie enroulée sur ledit support d'enroulement, et au moins une position déployée.

Selon l'invention, ledit boîtier est réalisé en polymère thermoplastique expansé.

La mise en oeuvre d'un tel matériau répond à la tendance actuelle des constructeurs automobiles d'utiliser des matériaux recyclables dans les différentes pièces composant un véhicule de façon à répondre à la réglementation concernant la gestion des déchets, et plus généralement le développement durable.

Notamment, le boîtier peut être réalisé en polypropylène expansé.

L'utilisation du polypropylène expansé pour fabriquer un boîtier de dispositif d'occultation est avantageuse en ce sens que ce matériau présente notamment :
- un faible poids;
- une très bonne tenue en température (de -40°C à + 110°C) ;
- une facilité de moulage ;
- un niveau performant d'absorption acoustique ;
- une bonne résistance mécanique ;
- une aptitude à être recyclé et réutilisé;
- une bonne mémoire élastique même en cas de sollicitations répétées.

Avantageusement, le support d'enroulement est réalisé en carton.

Le carton est en effet un matériau plus léger que le métal (comme l'aluminium par exemple) et présente l'avantage d'être recyclable. Il présente en outre une bonne tenue à la température (entre -30°C et 100°C), à l'humidité et aux vibrations.

Dans un mode de réalisation particulier de l'invention, le support d'enroulement est de forme sensiblement tronconique.

Selon une mise en oeuvre particulière de l'invention, le support d'enroulement est un tube dont le diamètre intérieur est constant et dont l'épaisseur varie.

Dans une variante, le support d'enroulement est un tube dont le diamètre intérieur varie et dont l'épaisseur est constante.

Selon un mode de réalisation particulier, au moins une des extrémités dudit support d'enroulement est reliée audit boîtier par un ressort.

Ceci permet d'autoriser des tolérances aux jeux et un déplacement du tube, dans au moins deux directions perpendiculaires.

Selon cette approche, ledit ressort est avantageusement un ressort hélicoïdal tronconique.

Au moins une des extrémités dudit ressort peut, dans ce mode de réalisation, être préformée de façon à bloquer le ressort en rotation par rapport à la pièce à laquelle elle est solidarisée.

L'invention concerne également un véhicule comprenant au moins un dispositif d'occultation tel que décrit précédemment.

### 5. Liste des figures

D'autres caractéristiques et avantages de l'invention apparaîtront plus clairement à la lecture de la description suivante d'un mode de réalisation préférentiel de l'invention, et de plusieurs de ses variantes, donnés à titre d'exemples illustratifs et non limitatifs, et des dessins annexés parmi lesquels :
- les figures 1A et 1B sont des vues schématiques de l'intérieur d'un véhicule d'un dispositif d'occultation conforme à l'invention dont la toile est déployée le long d'une vitre de portière;
- la figure 2 est une vue en coupe de la partie supérieure d'un caisson intérieur d'un véhicule auquel est solidarisé un dispositif d'occultation selon l'invention ;
- les figures 3A à 3E illustrent un exemple de boîtier de dispositif d'occultation selon l'invention ;
- les figures 4A et 4B sont des vues en coupe de différentes variantes du tube d'enroulement d'un dispositif d'occultation selon l'invention;
- la figure 5 illustre une portion d'un store et plus précisément d'une variante d'assemblage du tube enrouleur dans le boîtier du store par l'intermédiaire d'un ressort de solidarisation ;
- la figure 6 présente le store de la figure 5, le tube à enrouleur ayant été retiré;
- la figure 7 illustre l'axe de la figure 6 ;
- la figure 8 présente l'axe de la figure 7, assemblé avec un ressort de solidarisation ;
- la figure 9 présente une portion du boîtier du store de la figure 5 ;
- la figure 10 illustre la portion du boîtier de la figure 9, équipé du ressort de solidarisation ;
- les figures 11A et 11B sont deux vues du ressort de solidarisation du cette variante d'assemblage du tube enrouleur.

### 6. Description d'un mode de réalisation de l'invention

### 6.1 Rappel du principe de l'invention

Tel que mentionné précédemment, le principe général de l'invention repose donc sur le fait de prévoir un boîtier de store à enrouleur qui soit fabriqué en polymère thermoplastique expansé, tel que le polypropylène expansé (PPE).

### 6.2 Le store à enrouleur

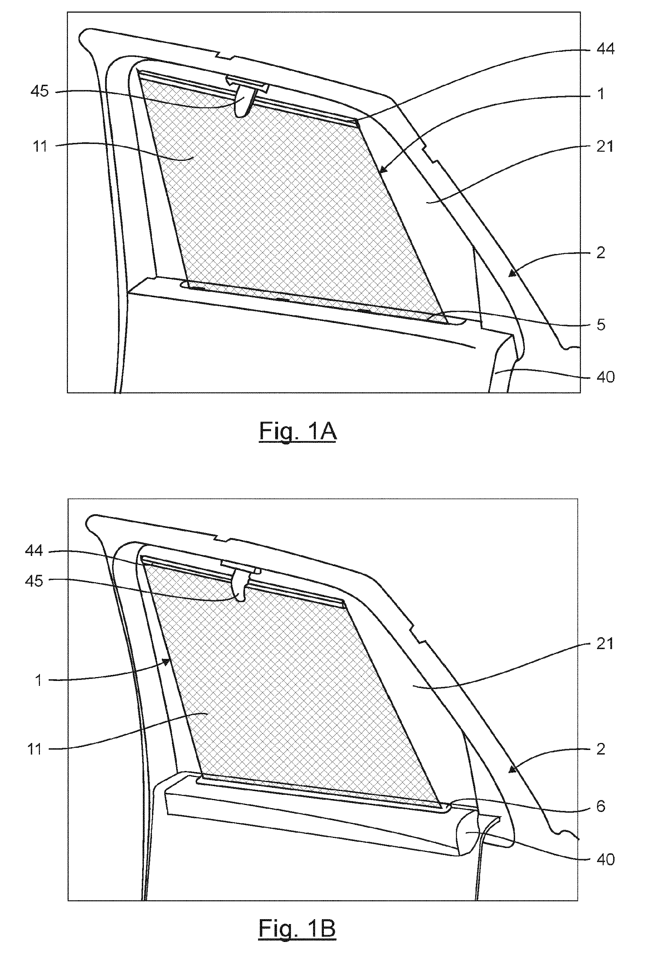

Sur les figures 1A et 1B, on a représenté schématiquement un store à enrouleur conforme à l'invention dans une application pour une vitre latérale de véhicule.

Ce store 1 comporte un boîtier 20 qui contient un dispositif d'enroulement d'une toile d'occultation souple 11. Tel qu'illustré, cette toile 11 forme écran en position déployée, devant/en regard d'une vitre latérale 21 d'une portière 2 d'un véhicule automobile.

Le boîtier 20 est visible sur la figure 1B et est caché par l'habillage intérieur 40 de la portière 2 sur la figure 1 A.

L'une des extrémités de la toile 11 est solidaire du tube d'enroulement, et l'autre extrémité de la toile 11 est fixée à une barre de tirage 44 qui est entraînée manuellement à l'aide d'une poignée de préhension 45. Dans une variante, la barre de tirage est entraînée par un moteur.

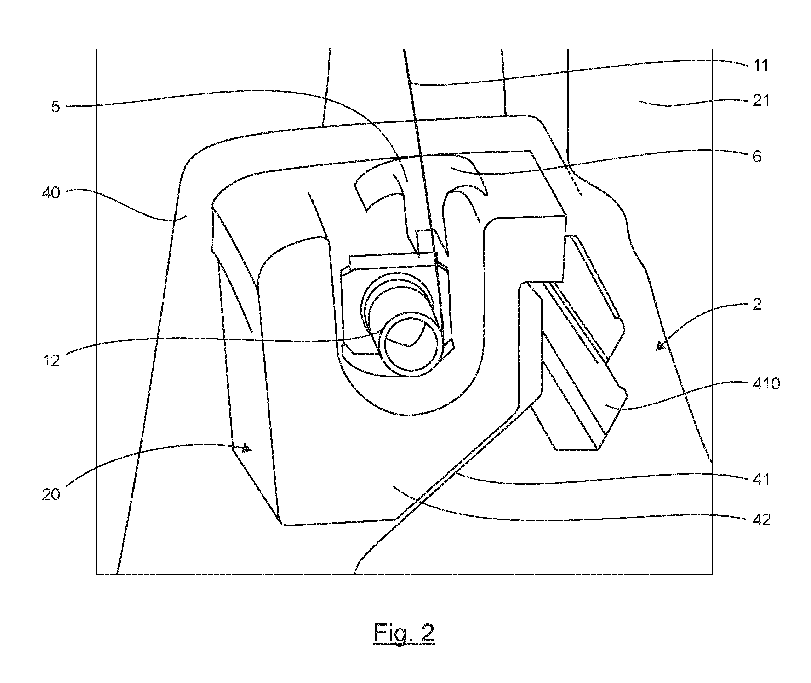

Un passage, définissant une fente 5, est prévu dans le boîtier 20 du store et sur la partie supérieure de l'habillage intérieur 40 de la portière 2 (voir figure 2), au travers duquel la toile 11 peut être déployée ou repliée. Comme illustré sur la figure 1B, un enjoliveur 6 recouvre en partie la fente 5.

La constitution du dispositif d'enroulement selon un mode de réalisation particulier sera mieux comprise en se reportant à la figure 2.

Le dispositif d'enroulement du boîtier 20 comporte un rouleau ou tube d'enroulement 12 (ou tube enrouleur), monté mobile en rotation autour d'un axe dans le boîtier 20.

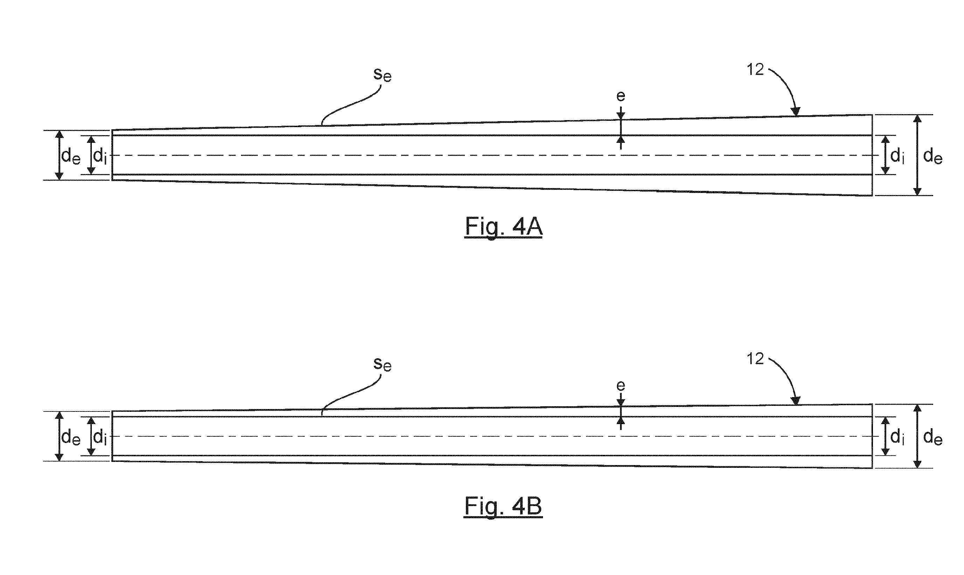

Dans le mode de réalisation des figures 4A et 4B, le tube d'enroulement est de forme générale conique, ou plus précisément tronconique, pour permettre un enroulement sans pli d'une toile de forme générale trapézoïdale (adaptée à la surface à occulter). Dans une autre variante, le tube d'enroulement peut être de forme cylindrique, c'est-à-dire de diamètre constant sur toute sa longueur.

Le boîtier 20 intègre des moyens d'aide à la mise en place, ou de positionnement, du tube d'enroulement 12. Comme on le verra par la suite, des paliers 14 sont montés sur les extrémités du tube d'enroulement 12 et s'enchâssent dans des porte-paliers 15 du boîtier 20.

En position repliée, la toile 11 est essentiellement entourée autour du tube d'enroulement 12, et la barre de tirage 44 se trouve donc au voisinage de celui-ci.

Dans cet exemple, le store 1 est actionné manuellement, et l'utilisateur agit alors sur la barre de tirage 44 de façon à l'éloigner du tube d'enroulement 12. La toile 11 du store 1 peut être alors déployée, de bas en haut, pour occulter au moins la plus grande partie de la vitre latérale 21 de la portière 2. En d'autres termes, la toile 11 est déployée le long de la vitre 21.

Le repli de la toile 11 est obtenu par l'action d'un dispositif de rappel élastique connu (un ressort de rappel par exemple logé dans le boîtier) entraînant le tube d'enroulement 12.

### 6.3 Le boîtier du store à enrouleur

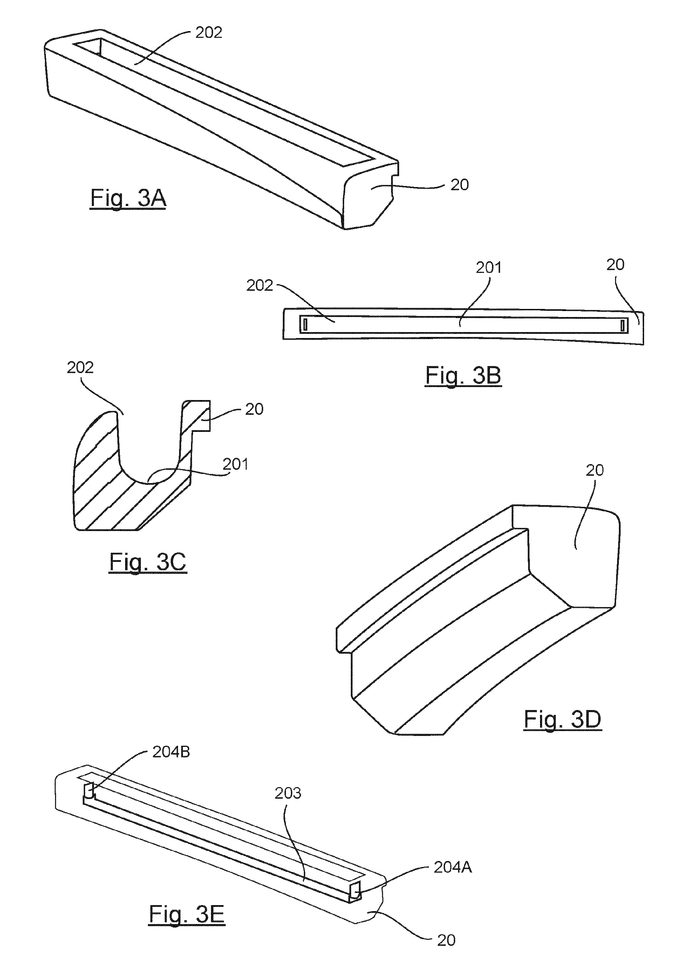

Les figures 3A à 3E illustrent un exemple de boîtier 20 selon l'invention.

Le boîtier 20 présente une forme allongée dont le profil est illustré sur la figure 3D.

Sa partie centrale 201 est creuse et est notamment destinée à intégrer la toile d'occultation 11 enroulée sur le tube enrouleur 12. Les deux extrémités supérieures de la cassette 20 s'ouvrent sur une fente 202 qui s'étend sur toute la longueur de la cassette et qui constitue un passage pour la toile d'occultation 11 lors de son déploiement et de son repli.

Dans cet exemple, le boîtier 20 est réalisé en polypropylène expansé (PPE). Le polypropylène est un polymère thermoplastique qui se présente avant transformation sous la forme de billes non expansées. Ces billes sont placées dans un moule fermé et sont soumises à une expansion (c'est-à-dire qu'elles augmentent de volume tout en gardant une forme sphérique) grâce à l'injection de vapeur d'eau dans le moule qui soude les billes expansées entre elles.

Le recours à un tel matériau confère à la cassette une bonne rigidité et permet le blocage des dilatations tant en températures hautes qu'en températures basses. Ce matériau présente également une bonne mémoire de forme.

En outre, un tel boîtier 20 est moins lourd qu'un boîtier moulé par injection (en ABS PC ou en polypropylène renforcé par 30% de fibres de verre ou en aluminium par exemple) et présente des performances phoniques (absorption des bruits) améliorées par rapport à ces boîtiers moulé par injection qui ont tendance à propager les bruits.

Par ailleurs, le boîtier 20 de l'invention est aisément recyclable.

Enfin, l'assemblage du boîtier 20 à la portière est simplifié. En effet, le moulage du boîtier 20 permet la mise en oeuvre de formes complexes, notamment de nervures et de contre-dépouilles par exemple, ce que ne permet pas la technique de moulage par injection de l'art antérieur, par exemple.

Eventuellement, des moyens de rigidification du boîtier 20, par exemple sous la forme d'au moins une lame métallique 42 peuvent être prévus.

Le boîtier 20 comprend un support 203 qui présente une plaque, ou platine, sensiblement rectangulaire hors de laquelle saillissent, à chacune des extrémités, des moyens de solidarisation (ou porte-paliers) 204A, 204B des éléments d'accrochage (paliers) du tube enrouleur 12.

Dans ce mode de réalisation particulier, le support 203 est surmoulé en aluminium ou en acier galvanisé.

On solidarise le tube enrouleur 12 au support 203 en venant embrocher ou clipper les éléments d'accrochage du tube enrouleur 12 sur les moyens de solidarisation 204A, 204B.

### 6.4 L'assemblage du store à enrouleur

La figure 2 illustre une représentation en coupe du store à enrouleur 1 de l'invention, monté dans une portière 2 de véhicule automobile.

Ainsi, le boîtier 20 dans lequel est logé le tube enrouleur 12 est dissimulé à l'intérieur de la portière 2 et fixé à l'élément de tôle intérieur 41 et au panneau intérieur 40 de cette portière qui s'étend sensiblement jusqu'au voisinage de la vitre 21. Le panneau intérieur 40 est solidarisé à l'élément de tôle intérieur 41 qui porte un joint lécheur 410. Une fente a été découpée sur la face supérieure du panneau intérieur 40 de façon à permettre le passage de la toile d'occultation 11 du store 1.

En position repliée, la toile 11 du store est classiquement enroulée autour du tube d'enroulement 12, et la barre de tirage 44 munie d'un élément de préhension 45 vient en appui contre un enjoliveur 6 placé sur la fente 5, notamment pour des raisons esthétiques, mais également de guidage et de limitation de l'usure de la toile 11.

L'assemblage du boîtier 20 sur le panneau intérieur 40 est relativement simple. En effet, le boîtier 20 est fixé au panneau intérieur 40 par collage et/ou par clippage. Contrairement à l'art antérieur, aucun bouterollage, par exemple, n'est nécessaire.

### 6.5 Le tube d'enroulement

La plupart des baies à occulter ne sont pas de forme rectangulaire et il est souvent avantageux, pour améliorer l'occultation, de prévoir que la barre de tirage s'incline par rapport à l'axe d'enroulement lors du déploiement de la toile.

A cet effet, le tube d'enroulement 12 est de forme sensiblement tronconique. Il peut notamment être réalisé en carton. Le carton est en effet un matériau plus léger que le métal (comme l'aluminium par exemple) et présente l'avantage d'être recyclable. Il présente en outre une bonne tenue à la température (entre -30°C et 100°C), à l'humidité et aux vibrations.

Dans les modes de réalisation des figures 4A et 4B, le tube d'enroulement 12 présente une section variable, le diamètre extérieur dₑ du tube d'enroulement 12 étant plus important à l'extrémité droite qu'à l'extrémité gauche. On notera que le diamètre extérieur dₑ du tube d'enroulement 12 varie progressivement sur sa longueur.

Sur la figure 4A, le diamètre intérieur dᵢ du tube 12 est constant sur toute sa longueur mais l'épaisseur e de la paroi du tube 12 varie. Selon une variante, illustrée par la figure 4B, le diamètre intérieur dᵢ du tube 12 varie sur sa longueur mais l'épaisseur e de la paroi du tube 12 est constante.

On peut notamment fabriquer un tel tube d'enroulement 12 en enroulant une bande de carton sur un mandrin cylindrique ou conique qui est entraîné en rotation.

On obtient ainsi de façon simple et peu coûteuse un tube d'enroulement 12 dont la surface extérieure Sₑ est suffisament continue et régulière pour éviter l'apparition de plis sur la toile lors de son enroulement. La conicité du tube 12 permet d'obtenir une inclinaison de la barre de tirage lors du déploiement de la toile.

Comme mentionné précédemment, des paliers sont montés sur les extrémités du tube enrouleur 12 et s'enchâssent dans des porte-paliers du boîtier 20.

### 6. 6 Variante de montage du tube enrouleur

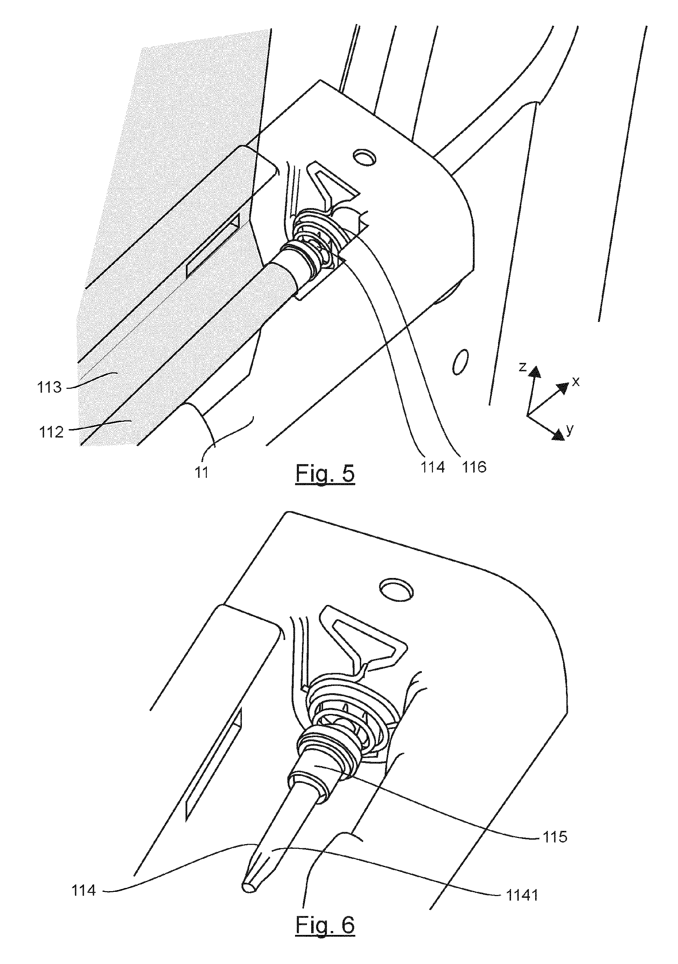

Dans une variante, le tube enrouleur de store de véhicule est installé dans un boîtier destiné à être solidarisé à la structure d'un véhicule automobile par l'intermédiaire d'un ressort de solidarisation. Ce mode de réalisation particulier est illustré sur les figures 5 à 11B.

Selon ce mode de réalisation, le dispositif d'occultation comprend donc un boîtier 111, dont seule une portion, correspondant à l'une des extrémités du boîtier, apparaît sur les figures 5 et 6. Ce boîtier est, dans le mode de réalisation illustré, destiné à être monté sur une portière de véhicule automobile. Il peut notamment être réalisé en un polymère thermoplastique expansé, et par exemple en polypropylène.

Ce boîtier reçoit un tube enrouleur 112, cylindrique ou tronconique en fonction des besoins, autour duquel peut être enroulé la toile d'occultation 113. Le tube enrouleur 112 peut par exemple être réalisé en carton, notamment par enroulement d'une bande de carton autour d'un mandrin.

Chaque extrémité de ce tube 112 coopère avec un axe 114, pénétrant à l'intérieur du tube et formant palier. Cet axe 114 apparaît de façon plus claire sur les figures 6 à 8.

Ainsi, comme il apparaît sur la figure 6, l'axe 114 porte une bague 115, de dimension adaptée pour coopérer avec le diamètre intérieur du tube enrouleur 112, et permettre sa rotation.

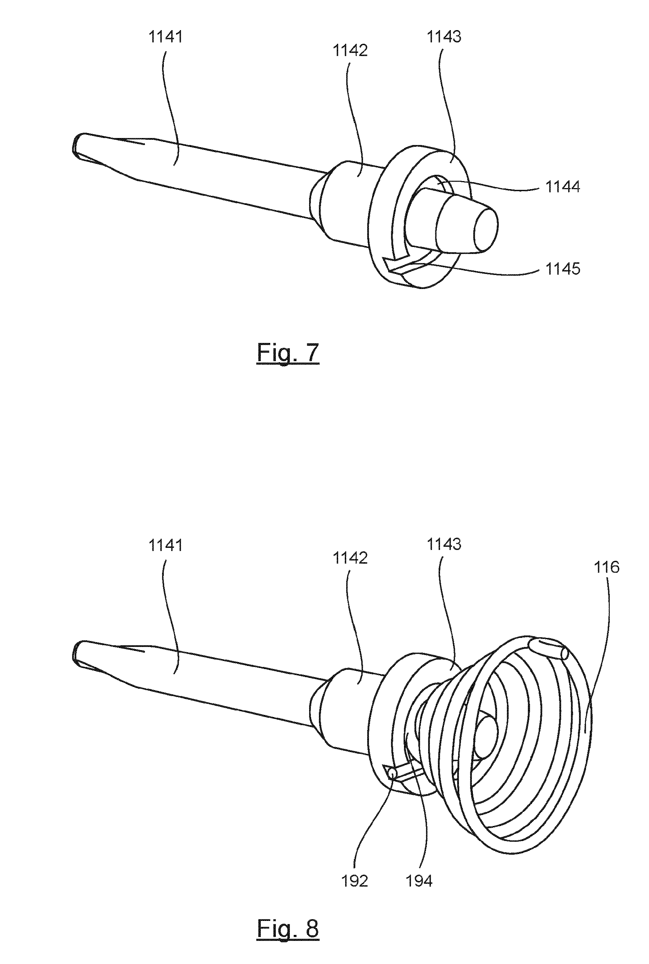

L'axe 114 comprend donc d'une part une portion 1141, pénétrant à l'intérieur du tube, un épaulement 1142 portant la bague 115 et une portion 1143, prévue pour coopérer avec le ressort trop conique 116. Des formes préférentielles de ces différents éléments apparaissent, à titre d'exemples, sur les figures 7 et 8.

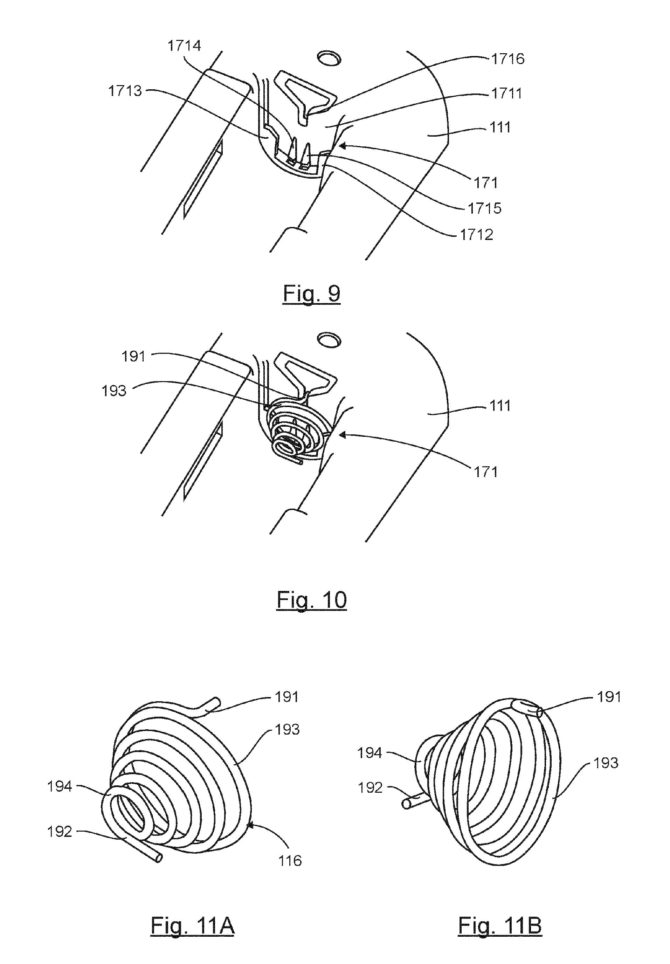

Selon ce mode de réalisation, le ressort tronconique est adapté, à ses deux extrémités, pour assurer un blocage en rotation du ressort, d'une part par rapport au boîtier 111 et d'autre part par rapport à l'axe 114. Les deux extrémités de ce ressort sont notamment illustrées par les figures 11A et 11B. Comme on voit sur ces figures, la première extrémité 191 du ressort 116, associée à la spire de plus grand diamètre (côté coopérant avec le boîtier) est redressé de 90°, de façon à s'étendre sensiblement parallèlement à l'axe du ressort (c'est-à-dire également l'axe du tube enrouleur, aux jeux près).

La seconde extrémité 192 est également redressée, pour s'étendre linéairement, mais dans un plan sensiblement perpendiculaire à l'axe du ressort (c'est-à-dire également sensiblement selon le plan d'une spire).

Comme cela apparaît sur les figures 9 et 10, l'extrémité du boîtier 111 présente un logement 171 destiné à recevoir la spire 193 de plus grand diamètre (voir figure 10). Ce logement comprend une paroi de fond 1711 et deux nervures 1712 et 1713 maintenant la spire 193 de façon à l'empêcher de se déplacer selon l'axe du ressort (axe X de la figure 5). Deux nervures supplémentaires 1714 et 1715 sont prévues pour venir chevaucher la partie inférieure de la spire 193, et l'immobiliser selon un axe perpendiculaire à l'axe du ressort (axe Z de la figure 5), de façon à empêcher le déplacement du ressort 116 selon cet axe.

Enfin, une fente 1716 est formée dans le boîtier, pour recevoir l'extrémité 191 du ressort 116, et empêcher toute rotation de celui-ci par rapport au boîtier 111.

La spire de plus petit diamètre 194 est quant à elle mise en place sur la portion 1143 prévue à cet effet de l'axe 114. Comme on le voit sur la figure 8, cette spire 194 vient s'inscrire dans le logement 1144, et l'extrémité 192 prend place dans la portion 1945 de ce logement (le logement 1144 et son extrémité 1145 apparaissent plus clairement sur la figure 7). Ainsi, on assure un blocage en rotation du ressort 116 par rapport à l'axe 114.

### 6.7 Avantages conférés par un store selon l'invention

La structure d'un store selon l'invention qui est solidarisé au panneau intérieur d'une portière de véhicule et qui se compose donc notamment d'un boîtier en PPE et d'un tube enrouleur en carton, confère notamment les avantages suivants :
- recyclage du boîtier et/ou du tube aisé;
- faible poids;
- montage et démontage aisé ;
- bonne rigidité du panneau intérieur ;
- blocage des dilatations à hautes et basses températures ;
- assurance d'une protection des éléments constitutifs du store, notamment du tube enrouleur (par exemple lors d'un appui du coude sur le panneau intérieur) ;
- bonne tenue au vieillissement climatique, à l'ensoleillement, à la corrosion, à la fatigue en vibration, en endurance climatique.

Il est à noter qu'un boîtier tel que décrit ci-dessus peu être équipé d'un tube en un autre matériau, selon une des techniques connues. De même, un boîtier de type connu en soi peut être équipé d'un tube en carton tel que décrit ci-dessus.

## Revendications

1. Dispositif d'occultation d'une baie d'une portière d'un véhicule automobile, comprenant un boîtier dans lequel est logé un support d'enroulement auquel est solidarisée une toile d'occultation mobile entre une position repliée, dans laquelle elle est au moins en partie enroulée sur ledit support d'enroulement, et au moins une position déployée,
**caractérisé en ce que** ledit boîtier est réalisée en polymère thermoplastique expansé.

2. Dispositif d'occultation selon la revendication 1, **caractérisé en ce que** ledit boîtier est réalisé en polypropylène expansé.

3. Dispositif d'occultation selon la revendication 1 ou 2, **caractérisé en ce que** ledit support d'enroulement est réalisé en carton.

4. Dispositif d'occultation selon la revendication 3, caractérisé en ce ledit support d'enroulement est de forme sensiblement tronconique.

5. Dispositif d'occultation selon la revendication 4, **caractérisé en ce que** ledit support d'enroulement est un tube dont le diamètre intérieur est constant et dont l'épaisseur varie.

6. Dispositif d'occultation selon la revendication 4, **caractérisé en ce que** ledit support d'enroulement est un tube dont le diamètre intérieur varie et dont l'épaisseur est constante.

7. Dispositif d'occultation selon l'une quelconque des revendications 1 à 6, **caractérisé en ce qu'**au moins une des extrémités dudit support d'enroulement est reliée audit boîtier par un ressort.

8. Dispositif d'occultation selon la revendication 7, **caractérisé en ce que** ledit ressort est un ressort hélicoïdal tronconique.

9. Dispositif d'occultation selon l'une quelconque des revendications 7 et 8, **caractérisé en ce qu'**au moins une des extrémités dudit ressort est préformée de façon à bloquer le ressort en rotation par rapport à la pièce à laquelle elle est solidarisée.

10. Véhicule automobile, **caractérisé en ce qu'**il comprend au moins un dispositif d'occultation selon l'une quelconque des revendications 1 à 9.
